# FASCICULE DE BREVET EUROPEEN

(11) **EP 2 802 638 B1**
(45) Date de publication et mention de la délivrance du brevet: **13.03.2019**
(21) Numéro de dépôt: 12813394.9
(22) Date de dépôt: 20.11.2012
(51) Int. Cl.: C10J 3/72, C10J 3/48

(54) **PROCÉDÉ INTEGRE DE GAZEIFICATION ET COMBUSTION INDIRECTE DE CHARGES HYDROCARBONEES SOLIDES EN BOUCLE CHIMIQUE**
INTEGRIERTES GASIFIZIERUNGSVERFAHREN IN EINEM CHEMISCHEN KREISLAUF UND INDIREKTE VERBRENNUNG FESTER KOHLENWASSERSTOFFEINSÄTZE
INTEGRATED METHOD FOR THE CHEMICAL-LOOPING GASIFICATION AND INDIRECT COMBUSTION OF SOLID HYDROCARBON FEEDSTOCKS

(30) Priorité: 11.01.2012 FR 1200085
(43) Date de publication de la demande: 19.11.2014
(73) Titulaire: IFP Energies nouvelles, 92500 Rueil-Malmaison (FR); Total Raffinage Chimie, 92400 Courbevoie (FR)
(72) Inventeur: YAZDANPANAH, Mahdi, 69008 Lyon (FR); FORRET, Ann, 69420 Longes (FR); GAUTHIER, Thierry, 69530 Brignais (FR)
(74) Mandataire: IFP Energies nouvelles
(86) Numéro de dépôt international: PCT/FR2012/000473
(87) Numéro de publication internationale: WO 2013/104836

(56) Documents cités:
- US-A- 3 031 287
- US-A- 4 343 624
- US-A- 4 435 374
- US-A1- 2008 134 579

## Description

### DOMAINE DE L'INVENTION

L'invention concerne un procédé intégré de gazéification et combustion indirecte d'hydrocarbures solides par oxydo-réduction en boucle chimique, pour la production de chaleur et/ou la production de gaz de synthèse CO + H2.

### Terminologie

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

### Art antérieur

Dans un contexte de demande énergétique mondiale croissante, la capture du dioxyde de carbone en vue de sa séquestration est devenue une nécessité incontournable afin de limiter l'émission de gaz à effet de serre préjudiciable à l'environnement. Le procédé d'oxydo-réduction en boucle sur masse active, ou Chemical Looping Combustion (CLC) dans la terminologie anglo-saxonne, permet de produire de l'énergie à partir de combustibles hydrocarbonés tout en facilitant la capture du dioxyde de carbone émis lors de la combustion.

Un transporteur d'oxygène (oxyde métallique) est utilisé pour le transfert de l'oxygène en continu du "réacteur air" ou "réacteur d'oxydation" (RO) vers le "réacteur fuel" ou "réacteur de combustion" ou "réacteur de réduction" (RR) où l'oxygène est apporté au combustible. Ainsi, le contact direct entre l'air et le combustible est évité. Le gaz résultant est riche en CO₂ et n'est pas dilué avec de l'azote. Il peut ainsi être, après simple condensation de l'eau produite, comprimé et stocké. Le transporteur d'oxygène réduit (Me) est ensuite transporté vers le réacteur air afin d'être ré-oxydé (en MeO), formant ainsi une boucle chimique. Les combustibles solides, ayant un rapport élevé de carbone sur hydrogène, produisent une quantité élevée de gaz à effet de serre. Ainsi, la combustion des combustibles solides est une application particulièrement intéressante pour le procédé CLC. Diverses configurations CLC ont déjà été développées et testées à l'échelle laboratoire pour la combustion des solides. Cependant, des travaux de recherche supplémentaires sont nécessaires pour garantir la faisabilité du procédé. Les défis technologiques les plus importants pour le procédé CLC avec charge solide concernent la séparation solide - solide (transporteur d'oxygène - combustible solide imbrûlé) ainsi que l'opération du procédé à pression élevée.

US-2008 010134579-A1 qui porte sur un procédé de production d'H2, divulgue
- une étape de mise en contact d'une charge hydrocarbonée solide avec de l'eau dans une zone réactionnelle de gazéification
- une étape d'alimentation d'une zone réactionnelle de réduction d'une boucle chimique d'oxydo-réduction et
une étape de réoxydation des particules de solide porteur d'oxygène issues de la zone réactionnelle de réduction de la boucle chimique dans la zone réactionnelle d'oxydation au moyen d'un gaz oxydant (air).

US-4 343 624 porte sur l'utilisation de lits fluidisés rotatifs dans un système de production d'hydrogène basé sur la réaction entre la vapeur et le fer.

US-3 031 287 porte sur procédé de fabrication d'un mélange gazeux comprenant de l'hydrogène, du monoxyde de carbone et du méthane à partir de gaz contenant une part substantielle de monoxyde de carbone.

### Description de l'invention

Afin de pallier les inconvénients précités, un nouveau système est proposé afin de brûler (et/ou gazéifier) un combustible solide sans contact direct entre le transporteur d'oxygène et le combustible.

### Résumé de l'invention

L'invention concerne un procédé intégré de gazéification et combustion indirecte en boucle chimique d'une charge hydrocarbonée solide selon la revendication 1.

On recycle une partie (5) de l'effluent concentré en CO₂ et H₂O produit dans la zone de réduction RR pour alimenter en oxygène la zone réactionnelle de gazéification RG.

Dans un mode de réalisation, on alimente la zone réactionnelle de réduction RR par la totalité de l'effluent gazeux (3) produit dans la zone réactionnelle de gazéification RG, afin de produire de la chaleur qui est récupérée au niveau de la zone réactionnelle d'oxydation RO ou sur les lignes de transport des effluents gazeux.

Dans un autre mode de réalisation, on alimente la zone réactionnelle de réduction RR par une partie (3a) de l'effluent gazeux produit dans la zone réactionnelle de gazéification RG en quantité suffisante pour produire l'énergie nécessaire à la réaction de gazéification, l'autre partie (3b) permettant de produire du gaz de synthèse CO + H2.

De préférence, la charge hydrocarbonée solide est choisie parmi le charbon, les catalyseurs cokés du procédé de craquage catalytique en lit fluidisé (FCC) ou les cokes produits par le procédé flexicoker.

L'invention concerne également une installation de gazéification et combustion en boucle chimique comprenant selon la revendication 5.

### Description détaillée de l'invention

### Gazéification du combustible solide

La réaction de gazéification de la charge hydrocarbonée solide se déroule dans la zone réactionnelle de gazéification, en présence de vapeur d'eau et éventuellement de CO₂ (dans le cas où l'on recycle une partie de la fumée sortie du réacteur de combustion RR vers l'alimentation de la zone de gazéification RG). L'eau introduite dans la zone de gazéification peut être vaporisée et/ou sous pression.

Dans les conditions opératoires du procédé selon l'invention, à savoir une température avantageusement comprise entre 800 et 1100 °C, une pression avantageusement comprise entre 1 et 20 bars, un rapport H2O/ charge avantageusement compris entre 7 et 10, la gazéification est complète, de telle sorte que sont produits uniquement du gaz de synthèse CO + H2 et de l'eau résiduelle. En sortie de la zone de gazéification, on récupère également les cendres produites par la gazéification de la charge hydrocarbonée solide.

La réaction de gazéification est endothermique, l'énergie nécessaire est fournie au moins en partie par la combustion exothermique de tout ou partie du gaz de synthèse produit dans la boucle chimique.

Lorsque tout le gaz de synthèse produit est envoyé dans la zone de combustion de la boucle chimique, l'énergie fournie par la combustion du gaz de synthèse est excédentaire par rapport aux besoins de la réaction de gazéification. Il est alors possible de récupérer l'énergie excédentaire sous forme de chaleur, au moyen d'un ou plusieurs échangeurs placés dans la zone d'oxydation ou sur les lignes de transport de gaz.

Lorsqu'une partie seulement du gaz de synthèse est envoyée dans la zone de combustion de la boucle chimique, l'énergie fournie par la combustion du gaz de synthèse est de préférence uniquement utilisée pour répondre aux besoins de la réaction de gazéification. Dans ce cas, afin de permettre de maximiser la production du gaz de synthèse en sortie de procédé, il convient d'envoyer dans la zone de combustion RR une partie du gaz de synthèse en quantité strictement nécessaire pour obtenir l'énergie nécessaire à la gazéification.

### Réaction de combustion du gaz de synthèse en boucle chimique

Le procédé CLC consiste à mettre en oeuvre des réactions d'oxydo-réduction d'une masse active pour décomposer la réaction de combustion en deux réactions successives. Une première réaction d'oxydation de la masse active, avec de l'air ou un gaz jouant le rôle de comburant, permet d'oxyder la masse active.

Une seconde réaction de réduction de la masse active ainsi oxydée à l'aide d'un gaz réducteur permet ensuite d'obtenir une masse active réutilisable ainsi qu'un mélange gazeux comprenant essentiellement du dioxyde de carbone et de l'eau, voire du gaz de synthèse contenant de l'hydrogène et du monoxyde d'azote. Cette technique permet donc d'isoler le dioxyde de carbone ou le gaz de synthèse dans un mélange gazeux pratiquement dépourvu d'oxygène et d'azote. La combustion étant globalement exothermique, il est possible de produire de l'énergie à partir de ce procédé, sous la forme de vapeur ou d'électricité, en disposant des surfaces d'échange dans la boucle de circulation de la masse active ou sur les effluents gazeux en aval des réactions de combustion ou d'oxydation. Le brevet US 5 447 024 décrit un procédé de combustion en boucle chimique comprenant un premier réacteur de réduction d'une masse active à l'aide d'un gaz réducteur et un second réacteur d'oxydation permettant de restaurer la masse active dans son état oxydé par une réaction d'oxydation avec de l'air humide. La technologie du lit fluidisé circulant est utilisée pour permettre le passage continu de la masse active de son état oxydé à son état réduit.

La masse active, passant alternativement de sa forme oxydée à sa forme réduite et inversement, décrit un cycle d'oxydo-réduction.

Ainsi, dans le réacteur de réduction, la masse active (MₓO_{y}) est tout d'abord réduite à l'état MₓO_{y-2n-m/2}, par l'intermédiaire d'un hydrocarbure CₙHₘ (ici le gaz de synthèse) qui est corrélativement oxydé en CO₂ et H₂O, selon la réaction (1), ou éventuellement en mélange CO + H₂ selon les proportions utilisées.

(1) CₙHₘ + MₓO_{y} n CO₂ + m/2 H₂O + MₓO_{y-2n-m/2}

Dans le réacteur d'oxydation, la masse active est restaurée à son état oxydé (MₓO_{y}) au contact de l'air selon la réaction (2), avant de retourner vers le premier réacteur.

(2) MₓO_{y-2n-m/2} + (n+m/4) O₂ MₓO_{y}

Dans les équations ci-dessus, M représente un métal.

L'efficacité du procédé de combustion en boucle chimique (CLC) en lit fluidisé circulant repose dans une large mesure sur les propriétés physico-chimiques de la masse active d'oxydo-réduction.

L'installation de combustion en boucle chimique d'oxydo-réduction comprend une zone réactionnelle d'oxydation et une zone réactionnelle de réduction.

Le solide porteur d'oxygène est oxydé dans une zone d'oxydation comprenant au moins un lit fluidisé à une température généralement comprise entre 700 et 1200°C, préférentiellement entre 800 et 1000°C. Il est ensuite transféré dans une zone de réduction comprenant au moins un réacteur en fluidisé où il est mis en contact avec le combustible (ici le gaz de synthèse) à une température généralement comprise entre 700 et 1200°C, préférentiellement entre 800 et 1000°C. Le temps de contact varie typiquement entre 10 secondes et 10 minutes, de préférence entre 1 et 5 minutes. Le ratio entre la quantité de masse active en circulation et la quantité d'oxygène à transférer entre les deux zones réactionnelles est avantageusement compris entre 20 et 100.

Dans le cadre du procédé intégré selon l'invention, la combustion du gaz de synthèse dans la zone de réduction RR est totale, le flux de gaz en sortie du réacteur de réduction est composé essentiellement de CO₂ et de vapeur d'eau. Un flux de CO₂ prêt à être séquestré est ensuite obtenu par condensation de la vapeur d'eau. La production d'énergie est intégrée au procédé de combustion en boucle chimique CLC au moyen d'un échange de chaleur dans la zone réactionnelle et sur les fumées de la zone d'oxydation qui sont refroidies.

### Liste des figures

Figure 1 : La figure 1 représente le schéma du procédé intégré selon l'invention avec gazéification du combustible solide, puis combustion en boucle chimique du gaz de synthèse produit, dans son application pour la production de chaleur.
Figure 2 : La figure 2 représente le schéma du procédé intégré selon l'invention avec gazéification du combustible solide, puis combustion en boucle chimique d'une partie du gaz de synthèse produit, afin de fournir l'énergie nécessaire à la gazéification de la charge, dans son application pour la production de gaz de synthèse.
Figure 3 : La figure 3 illustre l'exemple et représente les résultats d'équilibre thermodynamique de 90% de H₂O et 10% Carbone simulés avec le logiciel CHEMKIN™.

### Description des figures

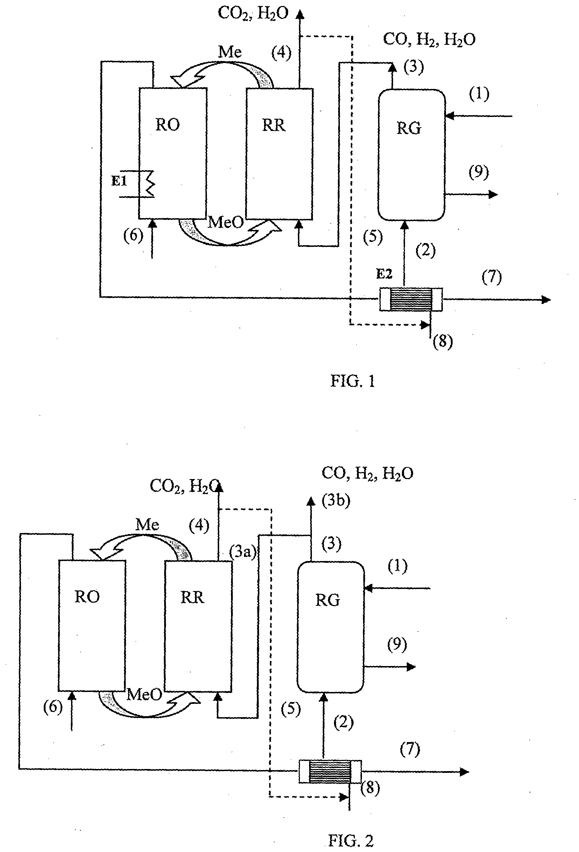

Le système permettant de mettre en oeuvre le procédé intégré de gazéification et combustion en boucle chimique selon l'invention est composé de trois réacteurs principaux : réacteur de gazéification RG, réacteur de réduction RR, réacteur d'oxydation RO.
Description de la figure 1 : La figure 1 illustre le procédé selon l'invention avec combustion indirecte de charge hydrocarbonée solide pour la production de chaleur.
Dans un premier temps, le combustible solide (1) est gazéifié en présence de vapeur d'eau (2) dans le réacteur de gazéification RG. L'effluent obtenu (CO+H2) comprenant du gaz de synthèse CO + H2 (3) est ensuite transporté vers le réacteur de réduction RR où le gaz est brûlé en contact du transporteur d'oxygène (Me/MeO) qui circule dans la boucle chimique sous forme de particules. Le gaz de combustion (4) sortant du réacteur de réduction RR contient essentiellement du CO₂ et de l'H₂O. Ainsi, le CO₂ peut être facilement séparé en condensant la vapeur d'eau. Une fraction de cet effluent gazeux comprenant essentiellement du CO₂ et de l'H₂O (5) peut être injectée dans le réacteur de gazéification RG afin de maintenir la température ou apporter de l'oxygène pour gazéifier le combustible. Le transporteur d'oxygène à l'état réduit Me est alors transporté vers le réacteur d'oxydation RO où il est ré-oxydé en contact avec l'air introduit comme gaz oxydant (6). La différence de degré d'oxydation entre le transporteur d'oxygène à l'état réduit (Me) en sortie du RR et le transporteur d'oxygène à l'état oxydé (MeO) en sortie du RO est de ΔX.
Un échangeur de chaleur E présent dans le réacteur d'oxydation (E1) ou sur une ligne de transport des fumées (E2) issues de la zone d'oxydation RO permet de récupérer de l'énergie sous forme de chaleur.
Dans un mode de réalisation préféré, les fumées issues de la zone d'oxydation RO (7) peuvent être refroidies dans l'échangeur E2 par échange de chaleur avec de l'eau sous forme liquide (8) afin d'alimenter le réacteur de gazéification avec de l'eau (2) sous forme vapeur, et/ou sous pression. Ceci présente également l'avantage d'évacuer de l'installation des fumées refroidies (7). Les cendres (9) sont également évacuées de l'installation depuis la zone de gazéification RG.

Description de la figure 2 : La figure 2 illustre le procédé intégré selon l'invention avec gazéification de la charge hydrocarbonée solide permettant à la fois la production de gaz de synthèse CO + H2 et la production de la chaleur nécessaire à la réaction de gazéification. Le schéma du système de gazéification et combustion indirecte dans son application pour la production de gaz de synthèse est présenté sur la figure 2. Ce système est similaire à la configuration du procédé de combustion présenté précédemment, avec une modification au niveau de la sortie du gaz (3) du réacteur de gazéification RG. Dans ce schéma, seule une fraction du gaz de synthèse (3a) produit dans le RG est transportée vers le réacteur de combustion RR pour produire la chaleur nécessaire à la gazéification. L'autre partie du gaz de synthèse (3b) est considérée comme produit du procédé et est évacuée de l'installation. La vapeur d'eau dans le gaz de synthèse peut être ultérieurement condensée afin d'améliorer la valeur calorifique du gaz.
Le procédé peut donc être utilisé pour la production de gaz de synthèse. Ce gaz de synthèse peut être utilisé comme charge d'autres procédés de transformation chimique, par exemple le procédé Fischer Tropsch permettant de produire à partir de gaz de synthèse des hydrocarbures liquides à chaînes hydrocarbonées longues utilisables ensuite comme bases carburants.

### Avantages du procédé selon l'invention

Les avantages du procédé selon l'invention sont nombreux.
Puisqu'il n'y a pas de contact direct entre le transporteur d'oxygène et le combustible (qui est préalablement gazéifié), le dispositif permettant de mettre en oeuvre le procédé selon l'invention peut être facilement adapté à des procédés de combustion déjà existants en remplaçant l'entrée d'air par de la vapeur d'eau et du CO₂.
Le procédé intégré selon l'invention rend superflue une séparation solide - solide (transporteur d'oxygène - combustible solide imbrûlé), puisque le combustible n'est mis en contact avec les particules de transporteur d'oxygène qu'une fois gazéifié, séparation qui était nécessaire jusqu'alors dans les procédés publiés de CLC pour charges solides.
Le procédé selon l'invention, dans ses deux modes de réalisation, peut fonctionner avec une pression élevée dans le réacteur de gazéification RG, tandis que les réacteurs RO et RR fonctionnent à pression atmosphérique. Ceci permet notamment de produire du gaz de synthèse à haute pression (pour le procédé Fischer-Tropsch par exemple). Par ailleurs, puisque les zones réactionnelles RO et RR fonctionnent à pression atmosphérique, le procédé intégré selon l'invention permet une baisse de coût de l'opération et des matériaux de construction des réacteurs RO et RR. Enfin on minimise les fuites du combustible vers les réacteurs RO et RR ainsi que la perte du transporteur d'oxygène vers le réacteur de gazéification RG.
La gazéification étant réalisée sous vapeur d'eau et non sous air (absence d'azote), le gaz de synthèse obtenu présente une valeur calorifique élevée.
La gazéification étant réalisée sous vapeur d'eau et non sous air (absence d'azote), la production des oxydes d'azote est minimisée.
La limite principale de ces procédés est l'apport de chaleur vers le réacteur de gazéification, car les gaz ont une capacité thermique limitée. Dans un mode de réalisation préféré, on injecte de la vapeur d'eau surchauffée (par exemple à une température avantageusement proche de 1000°C). Il doit être noté que grâce à l'injection de vapeur d'eau (et éventuellement de CO₂ issu des fumées issues de la zone de réduction), il y a 2 à 5 fois plus d'oxygène amené au réacteur de gazéification par rapport au cas où de l'air seul est injecté directement dans le réacteur. Cette différence est liée au fait que l'on remplace l'azote de l'air par H₂O ou CO₂.
La gazéification peut être conduite à pression atmosphérique ou sous pression. Dans le cas d'opération de la gazéification sous pression (par exemple à des pressions comprises entre 5 et 50 bars, préférentiellement comprises entre 20 et 40 bars), la vapeur d'eau nécessaire à la gazéification résulte d'un cycle vapeur alimenté au moins partiellement par de l'eau résultant des fumées du réacteur de réduction dans lequel la chaleur requise pour préchauffer et pressuriser la vapeur est récupérée par échange sur les fumées du réacteur d'oxydation (RO). Différents types de réacteurs peuvent être mis en oeuvre dans les différentes zones réactionnelles RG, RO et RR du procédé selon l'invention. Le réacteur de gazéification RG peut notamment être une chaudière à fluidisé circulant ou un lit fluidisé bouillonnant. Le choix technologique du type de réacteurs d'oxydation RO et de combustion RR est également large. Il peut s'agir de fluidisé bouillonnant ou de circulant.
Les charges hydrocarbonées solides utilisées dans le procédé selon l'invention peuvent être choisies parmi tous les types de combustibles hydrocarbonés solides, notamment du charbon, de la biomasse, des catalyseurs cokés du procédé de craquage catalytique en fluidisé (FCC) ou des cokes produits par le procédé flexicoker, pris seuls ou en mélange.
Les charges hydrocarbonées sont introduites dans le réacteur de gazéification RG sous la forme d'un solide dispersé, de diamètre moyen généralement compris entre 10 microns et 5 mm, préférentiellement compris entre 50 microns et 1 mm environ.
L'efficacité du procédé de combustion en boucle chimique CLC en fluidisé circulant repose dans une large mesure sur les propriétés physico-chimiques de la masse active d'oxydo-réduction. La réactivité du ou des couples oxydo-réducteurs mis en jeu ainsi que la capacité de transfert d'oxygène associée sont des paramètres qui influent sur le dimensionnement des réacteurs R0 et RR, sur les vitesses de circulation des particules. La durée de vie des particules quant à elle dépend de la résistance mécanique des particules ainsi que de leur stabilité chimique. Afin d'obtenir des particules utilisables pour ce procédé, les particules mises en jeu sont généralement composées d'un couple ou d'un ensemble de couples oxydo-réducteurs choisi parmi CuO/Cu, Cu2O/Cu, NiO/Ni, Fe2O3/Fe3O4, FeO/Fe, Fe3O4/FeO, MnO2/Mn2O3, Mn2O3/Mn3O4, Mn3O4/MnO, MnO/Mn, Co3O4/CoO, CoO/Co, et d'un liant apportant la stabilité physico-chimique nécessaire. Il est possible d'utiliser des minerais synthétiques ou naturels.

Les grosses particules sont plus difficiles à transporter et nécessitent des vitesses de transport importantes. Pour limiter les vitesses de transport dans les lignes de transfert et à l'intérieur des réacteurs, et donc limiter les pertes de charges dans le procédé ainsi que les phénomènes d'abrasion et d'érosion, il est donc préférable de limiter la taille des particules de matériau transporteur d'oxygène à une valeur maximum voisine de 500 microns.

De manière préférée, le matériau transporteur d'oxygène introduit dans l'installation de combustion en boucle chimique a donc une granulométrie telle que plus de 90% des particules ont une taille comprise entre 100 et 500 microns.
De manière plus préférée, le matériau introduit dans l'installation a une granulométrie telle que plus de 90% des particules ont un diamètre de particules compris entre 150 et 300 microns.

De manière encore plus préférée, le matériau introduit dans l'installation a une granulométrie telle que plus de 95% des particules ont un diamètre compris entre 150 et 300 microns.

Le procédé selon l'invention peut avantageusement être intégré dans une raffinerie.

### Exemple :

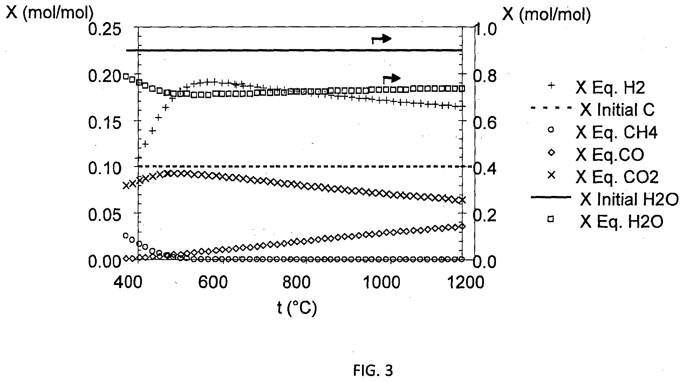

Dans l'exemple qui suit, le réacteur principal est le réacteur de gazéification (RG). La Figure 3 montre les concentrations (Xeq) d'équilibre thermodynamique des gaz dans le réacteur RG. Ces résultats illustrent bien qu'à l'état d'équilibre, presque tout le carbone injecté est converti en CO₂. La concentration de CO est très faible à environ 600°C, mais augmente avec la température. Ce graphique ainsi que le bilan matière sont utilisés pour calculer les différentes teneurs en gaz à la sortie du réacteur RG.

A cet effet, les résultats d'équilibre thermodynamique de 90% de H₂O et 10% de carbone ont été simulés avec le logiciel CHEMKIN™.
Un modèle d'ordre zéro en régime stationnaire a été développé pour étudier la faisabilité de ce système. Le charbon est injecté dans le avec un débit de 3 kg/h. Les propriétés du charbon injecté sont présentées dans le tableau 1. La gazéification a été réalisée avec de la vapeur d'eau surchauffée à 1000 °C et un débit massique de 27 kg/s (équivalent au débit stoechiométrique d'air nécessaire pour assurer la combustion complète). Les propriétés du gaz de synthèse à la sortie du réacteur RG sont présentées dans le tableau 2. Les concentrations sont calculées sur la base thermodynamique et le bilan matière. La température de sortie de réacteur RG est de 600 °C et la température moyenne du réacteur RG est de 800 °C.

**Tableau 1 : Propriétés (analyse ultime) du charbon utilisé pour le cas d'étude, avec LHV = 28 MJ/kg.**

| Composants | % poids | % poids (hors eau, cendres) |
|---|---|---|
| Carbone (C) | 64% | 72% |
| Hydrogène (H) | 5% | 6% |
| Azote (N) | 1% | 1% |
| Soufre total (S) | 1% | 1% |
| Oxygène (O) | 18% | 20% |
| Cendres | 12% | |

**Tableau 2 : concentrations des différents gaz à la sortie du réacteur de gazéification RG.**

| Composants | % poids | Débit (kg/s) | Débit (mol/s) | Concentration (mol%) | Concentration (hors eau, mol%) |
|---|---|---|---|---|---|
| CO₂ | 13.0% | 3.95 | 0.141 | 8% | 28% |
| H₂O | 81.4% | 22.93 | 1.273 | 71% | |
| CO | 1.8% | 0.51 | 0.018 | 1% | 4% |
| H₂ | 2.5% | 0.70 | 0.347 | 19% | 68% |
| CH₄ | 0.0% | 0.00 | 0.000 | 0% | 0% |
| N₂ | 0.1% | 0.03 | 0.001 | 0% | 0% |
| SO₂ | 0.2% | 0.04 | 0.0007 | 0% | 0% |

Le gaz de synthèse produit dans le réacteur de gazéification RG peut être envoyé en tout ou partie vers le réacteur de combustion afin de produire de l'énergie. Dans le cas de production de gaz de synthèse, seule une partie du gaz nécessaire pour maintenir le bilan énergétique global est envoyée vers le réacteur de combustion RR. Dans le présent exemple, la fraction minimale nécessaire à envoyer vers le réacteur de combustion est de 53%. Ce système peut donc délivrer 47% de gaz de synthèse comme produit.
Dans le cas de production de chaleur, lors de la combustion, tout le gaz de synthèse est brûlé dans le réacteur de réduction RR afin de produire de l'énergie.

## Revendications

1. Procédé intégré de gazéification et combustion indirecte en boucle chimique d'une charge hydrocarbonée solide dans lequel :
- on met en contact la charge hydrocarbonée solide (1) avec de l'eau (2) dans une zone réactionnelle de gazéification (RG) afin d'évacuer des cendres (9) et de produire un effluent gazeux (3) comprenant du gaz de synthèse : CO, H₂ et de l'eau H₂O, ladite mise en contact étant effectuée en l'absence d'air;
- on alimente la zone réactionnelle de réduction (RR) d'une boucle chimique d'oxydo-réduction, dans laquelle circulent des particules de solide porteur d'oxygène Me/MeO, par au moins une partie de l'effluent gazeux (3) produit dans la zone réactionnelle de gazéification pour produire un effluent gazeux (4) concentré en CO₂ et H₂O,
- on réoxyde les particules de solide porteur d'oxygène issues de la zone réactionnelle de réduction (RR) de la boucle chimique dans la zone réactionnelle d'oxydation (RO) au moyen d'un gaz oxydant (6) et on évacue des fumées (7),
l'énergie nécessaire à la réaction de gazéification étant fournie au moins en partie par la combustion exothermique de tout ou partie du gaz de synthèse produit dans la boucle chimique, et dans lequel :
- on recycle une partie (5) de l'effluent concentré en CO₂ et H₂O produit dans la zone de réduction (RR) pour alimenter en oxygène la zone réactionnelle de gazéification (RG), ladite partie (5) de l'effluent concentré en CO₂ et H₂O étant fournie à une alimentation de la zone de gazéification (RG) comportant de l'eau liquide (8), et on refroidit les fumées (7) dans un échangeur de chaleur (E2) placé sur une conduite de transport pour évacuer les fumées (7), par échange de chaleur avec de l'eau sous forme liquide (8) afin d'alimenter le réacteur de gazéification (RG) avec de l'eau sous forme vapeur, et/ou sous pression (2).

2. Procédé intégré de gazéification et combustion indirecte en boucle chimique selon la revendication 1 dans lequel on alimente la zone réactionnelle de réduction (RR) par la totalité de l'effluent gazeux (3) produit dans la zone réactionnelle de gazéification (RG), afin de produire de la chaleur qui est récupérée au niveau de la zone réactionnelle d'oxydation (RO) ou sur les lignes de transport des effluents gazeux.

3. Procédé intégré de gazéification et combustion indirecte en boucle chimique selon la revendication 1 dans lequel on alimente la zone réactionnelle de réduction (RR) par une partie (3a) de l'effluent gazeux produit dans la zone réactionnelle de gazéification (RG) en quantité suffisante pour produire l'énergie nécessaire à la réaction de gazéification, l'autre partie (3b) permettant de produire du gaz de synthèse CO + H₂.

4. Procédé intégré de gazéification et combustion indirecte en boucle chimique selon l'une des revendications précédentes dans lequel la charge hydrocarbonée solide est choisie parmi le charbon, les catalyseurs cokés du procédé de craquage catalytique en fluidisé (FCC) ou les cokes produits par le procédé flexicoker.

5. Installation de gazéification et combustion en boucle chimique comprenant :
- une zone réactionnelle de gazéification (RG) en l'absence d'air alimentée par une charge hydrocarbonée solide (1) et de l'eau (2) et comprenant une conduite de sortie d'un effluent gazeux comprenant du gaz de synthèse et de l'eau (3) et une conduite de sortie des cendres produites (9);
- une boucle chimique de combustion comprenant une zone réactionnelle de réduction (RR) et une zone réactionnelle d'oxydation (RO),
ladite zone réactionnelle de réduction RR étant alimentée par au moins une partie de l'effluent gazeux (3) issu de la zone de gazéification (RG) et par une conduite de transport des particules de solide porteur d'oxygène (MeO) issues de ladite zone d'oxydation (RO), et comprenant une conduite de sortie d'un effluent gazeux (4) comprenant du CO₂ et H₂O ;
et ladite zone réactionnelle d'oxydation (RO) étant alimentée par un gaz oxydant (6) et par une conduite de transport des particules de solide porteur d'oxygènes réduites (Me) issues de la zone réactionnelle de réduction, et comprenant une conduite de transport pour évacuer les fumées (7), et
- une conduite de transport d'une partie (5) de l'effluent gazeux comprenant du CO₂ et H₂0 (4) vers l'alimentation de la zone de gazéification (RG), ladite alimentation de la zone de gazéification (RG) comportant de l'eau liquide (8),
- au moins un échangeur de chaleur (E2) sur la conduite de transport des fumées (7) pour refroidir lesdites fumées (7) par échange de chaleur avec de l'eau sous forme liquide (8) afin d'alimenter le réacteur de gazéification (RG) avec de l'eau sous forme vapeur et/ou sous pression (2).

6. Installation selon la revendication 5 comprenant en outre au moins un échangeur de chaleur dans la zone d'oxydation RO (E1).

7. Installation selon la revendication 5 ou 6 dans laquelle la conduite de sortie de l'effluent gazeux (3) se divise en deux conduites permettant l'alimentation de la zone de réduction (RR) en gaz de synthèse pour la combustion (3a) et l'évacuation du gaz de synthèse produit (3b).

## Patentansprüche

1. Integriertes Verfahren zur Vergasung und indirekten Chemical Looping-Verbrennung einer Kohlenwasserstoffcharge, wobei:
- die feste Kohlenwasserstoffcharge (1) mit Wasser (2) in einer Vergasungsreaktionszone (RG) in Kontakt gebracht wird, um Asche (9) abzuführen und einen gasförmigen Abstrom (3) zu erzeugen, umfassend Synthesegas: CO, H₂ und Wasser H₂O, wobei das Inkontaktbringen in Abwesenheit von Luft durchgeführt wird;
- die Reduktionsreaktionszone (RR) eines Redox-Chemical Looping, in der die Sauerstoff tragenden Feststoffpartikel Me/MeO zirkulieren, mit mindestens einem Teil des gasförmigen Abstroms (3), der in der Vergasungsreaktionszone erzeugt wird, versorgt wird, um einen mit CO₂ und H₂O konzentrierten gasförmigen Abstrom (4) zu erzeugen,
- die Sauerstoff tragenden Feststoffpartikel, die aus der Reduktionsreaktionszone (RR) des Chemical Looping stammen, in der Oxidationsreaktionszone (RO) mit einem Oxidationsgas (6) reoxidiert werden und die Abgase (7) abgeführt werden,
wobei die für die Vergasungsreaktion notwendige Energie mindestens teilweise von der exothermen Verbrennung des gesamten oder eines Teils des Synthesegases geliefert wird, das im Chemical Looping erzeugt wird, und wobei:
- ein Teil (5) des mit CO₂ und H₂O konzentrierten Abstroms, der in der Reduktionszone (RR) erzeugt wird, um die Vergasungsreaktionszone (RG) mit Sauerstoff zu versorgen, rückgeführt wird, wobei der Teil (5) des mit CO₂ und H₂O konzentrierten Abstroms einer Versorgung der Vergasungszone (RG) zugeführt wird, umfassend flüssiges Wasser (8), und die Abgase (7) in einem Wärmetauscher (E2), der in einer Transportleitung zur Abfuhr der Abgase (7) platziert ist, durch einen Wärmeaustausch mit dem Wasser in flüssiger Form (8) abgekühlt werden, um den Vergasungsreaktor (RG) mit dem Wasser in der Form von Dampf und/oder unter Druck (2) zu versorgen.

2. Integriertes Verfahren zur Vergasung und indirekten Chemical Looping-Verbrennung nach Anspruch 1, wobei die Reduktionsreaktionszone (RR) mit der Gesamtheit des gasförmigen Abstroms (3) versorgt wird, der in der Vergasungsreaktionszone (RG) erzeugt wird, um Wärme zu erzeugen, die auf der Ebene der Oxidationsreaktionszone (RO) oder auf den Transportleitungen der gasförmigen Abströme rückgewonnen wird.

3. Integriertes Verfahren zur Vergasung und indirekten Chemical Looping-Verbrennung nach Anspruch 1, wobei die Reduktionsreaktionszone (RR) mit einem Teil (3a) des gasförmigen Abstroms, der in der Vergasungsreaktionszone (RG) erzeugt wird, in einer ausreichenden Menge versorgt wird, um die Energie zu erzeugen, die für die Vergasungsreaktion notwendig ist, wobei es der andere Teil (3b) gestattet, Synthesegas CO + H₂ zu erzeugen.

4. Integriertes Verfahren zur Vergasung und indirekten Chemical Looping-Verbrennung nach einem der vorhergehenden Ansprüche, wobei die feste Kohlenwasserstoffcharge aus Kohle, gekokten Katalysatoren des katalytischen Krack-Verfahrens im Fließbett (FCC) oder Koks, der durch das Flexicoker-Verfahren hergestellt wird, ausgewählt wird.

5. Anlage zur Vergasung und Chemical Looping-Verbrennung, umfassend:
- eine Vergasungsreaktionszone (RG) in Abwesenheit von Luft, die mit einer festen Kohlenwasserstoffcharge (1) und mit Wasser (2) versorgt wird und eine Auslassleitung eines gasförmigen Abstroms, umfassend Synthesegas und Wasser (3), und eine Auslassleitung der erzeugten Asche (9) umfasst;
- eine Chemical Looping-Verbrennung, umfassend eine Reduktionsreaktionszone (RR) und eine Oxidationsreaktionszone (RO); wobei die Reduktionsreaktionszone (RR) mit mindestens einem Teil des gasförmigen Abstroms (3), der aus der Vergasungszone (RG) stammt, und durch eine Transportleitung der Sauerstoff (MeO) tragenden festen Partikel, die aus der Oxidationszone (RO) stammen, versorgt wird, und umfassend eine Auslassleitung eines gasförmigen Abstroms (4), umfassend CO₂ und H₂O, und die Oxidationsreaktionszone (RO) mit einem Oxidationsgase(6) und durch eine Transportleitung der reduzierten Sauerstoff (Me) tragenden festen Partikel, die aus der Reduktionsreaktionszone stammen, versorgt wird, und umfassend eine Transportleitung, um die Abgase (7) abzuführen, und
- eine Transportleitung eines Teils (5) des gasförmigen Abstroms, umfassend CO₂ und H₂O (4), zur Vergasungszone (RG), wobei die Versorgung der Vergasungszone (RG) flüssiges Wasser (8) umfasst,
- mindestens einen Wärmetauscher (E2) auf der Transportleitung der Abgase (7), um die Abgase (7) durch einen Wärmeaustausch mit Wasser in flüssiger Form (8) abzukühlen, um den Vergasungsreaktor (RG) mit Wasser in der Form von Dampf und/oder unter Druck (2) zu versorgen.

6. Anlage nach Anspruch 5, außerdem umfassend mindestens einen Wärmetauscher in der RO-Oxidationszone (E1).

7. Anlage nach Anspruch 5 oder 6, wobei sich die Auslassleitung des gasförmigen Abstroms (3) in zwei Leitungen teilt, die eine Versorgung der Reduktionszone (RR) mit Synthesegas zur Verbrennung (3a) und die Abfuhr des erzeugten Synthesegases (3b) gestatten.

## Claims

1. An integrated method for gasification and indirect combustion of a solid hydrocarbon feedstock in a chemical loop, comprising:
- contacting solid hydrocarbon feedstock (1) with water (2) in a gasification reaction zone (RG) to discharge ashes (9) and produce a gaseous effluent (3) comprising syngas CO, H₂ and water H₂O, said contacting being performed in the absence of air;
- supplying reduction reaction zone (RR) of a redox chemical loop wherein oxygen-carrying solid particles Me/MeO circulate with at least part of gaseous effluent (3) produced in the gasification reaction zone to produce a CO₂ - and H₂O-concentrated gaseous effluent (4); and
- reoxidizing the oxygen-carrying solid particles from reduction reaction zone (RR) of the chemical loop in oxidation reaction zone (RO) by means of an oxidizing gas (6) and discharging fumes (7);
wherein energy required for the gasification reaction is provided at least partly by exothermic combustion of all or part of the syngas produced in the chemical loop, and wherein:
- a part (5) of the CO₂- and H₂O-concentrated effluent produced in reduction zone (RR) is recycled so as to supply gasification reaction zone (RG) with oxygen, said part (5) of the CO₂- and H₂O-concentrated effluent being provided at a feed point of the gasification zone (RG) comprising liquid water (8), and the fumes (7) are cooled in a heat exchanger (E2) placed on a transport line for discharging fumes (7), by exchange of heat with water in liquid form (8) in order to supply the gasification reactor (RG) with water in vapour form, and/or under pressure (2).

2. An integrated gasification and indirect chemical looping combustion method as claimed in claim 1, wherein reduction reaction zone (RR) is supplied with all of the gaseous effluent (3) produced in gasification reaction zone (RG) in order to produce heat that is recovered in oxidation reaction zone (RO) or on the gaseous effluent transport lines.

3. An integrated gasification and indirect chemical looping combustion method as claimed in claim 1, wherein reduction reaction zone (RR) is supplied with a part (3a) of the gaseous effluent produced in gasification reaction zone (RG) in sufficient amount to produce the energy required for the gasification reaction, the remainder (3b) allowing syngas CO+H₂ to be produced.

4. An integrated gasification and indirect chemical looping combustion method as claimed in one of the preceding claims, wherein the solid hydrocarbon feedstock is selected from among coal, coked catalysts from the fluidized bed catalytic cracking (FCC) method or cokes produced by the flexicoker process.

5. A gasification and chemical looping combustion plant comprising:
- a gasification reaction zone (RG) for gasification in the absence of air supplied with a solid hydrocarbon feedstock (1) and with water (2) comprising a discharge line for a gaseous effluent comprising syngas and water (3) and a discharge line for the ashes produced (9);
- a chemical combustion loop comprising a reduction reaction zone (RR) and an oxidation reaction zone (RO),
said reduction reaction zone (RR) being supplied with at least a part of the gaseous effluent (3) from gasification zone (RG) and through a line transporting the oxygen-carrying solid particles (MeO) from said oxidation zone (RO), and comprising a discharge line for a gaseous effluent (4) comprising CO₂ and H₂O;
and said oxidation reaction zone (RO) being supplied with an oxidizing gas (6) and through a line transporting the reduced oxygen-carrying solid particles (Me) from the reduction reaction zone, and comprising a transport line for discharging fumes (7), and
- a transport line for carrying a part (5) of the gaseous effluent comprising CO₂ and H₂O (4) to the feed point of the gasification zone (RG), said feed point of the gasification zone (RG) comprising liquid water (8),
- at least one heat exchanger (E2) on the transport line of the fumes (7) for cooling said fumes (7) by exchange of heat with water in liquid form (8) in order to supply the gasification reactor (RG) with water in vapour form and/or under pressure.

6. The plant as claimed in claim 5, also comprising at least one heat exchanger in the oxidization zone RO (E1).

7. The plant as claimed in claim 5 or 6, wherein the gaseous effluent (3) discharge line divides into two lines allowing supply of the reduction zone (RR) with syngas for combustion (3a) and discharge of the syngas produced (3b).
